# FASCICULE DE BREVET EUROPEEN

(11) **EP 1 344 963 B1**
(45) Date de publication et mention de la délivrance du brevet: **04.05.2011**
(21) Numéro de dépôt: 03290642.2
(22) Date de dépôt: 14.03.2003
(51) Int. Cl.: F16H 61/02, F16H 59/36, F16H 59/74

(54) **Procédé et dispositifs de contrôle des changements de rapport d'une transmission automatique ou automatisee**
Verfahren und Vorrichtung zur Schaltungssteuerung in einem Automatik- oder automatisierten Getriebe
Procedure and device for control of changing speed in an automatic or automatized transmission

(30) Priorité: 15.03.2002 FR 0203238
(43) Date de publication de la demande: 17.09.2003
(73) Titulaire: Renault s.a.s., 92100 Boulogne Billancourt (FR)
(72) Inventeur: Poisson, Carine, 93160 Noisy-le Grand (FR)
(74) Mandataire: Rougemont, Bernard

(56) Documents cités:
- WO-A-99/01685
- DE-A1- 3 613 332
- DE-A1- 19 929 087

## Description

La présente invention concerne le contrôle des changements de rapport d'une transmission automatique ou automatisée respectant des lois de passage établies en fonction de la vitesse de déplacement du véhicule et de la charge du moteur.

Elle a pour objet un procédé de contrôle de changements de rapport, ainsi que les calculateurs et les transmissions dans lesquels un tel procédé de contrôle est mis en oeuvre.

Cette invention trouve une application privilégiée, mais non limitative, sur des transmissions automatiques ou automatisées (boîtes de vitesses automatiques ou robotisées) à rapports étagés, obéissant par exemple à des lois de passage dites « auto-adaptatives », capables de s'adapter au style de conduite du conducteur.

Dans les commandes de changement de rapport actuelles, en mode automatique, les changements de rapport sont décidés en fonction de la vitesse du véhicule et de la charge moteur. Ces critères de vitesse et de charge sont traduits sous forme de lois de changement de rapport, commodément visualisées dans le plan de coordonnées Vitesse véhicule / Variable de charge du moteur (angle papillon, position pédale d'accélérateur, puissance ...).

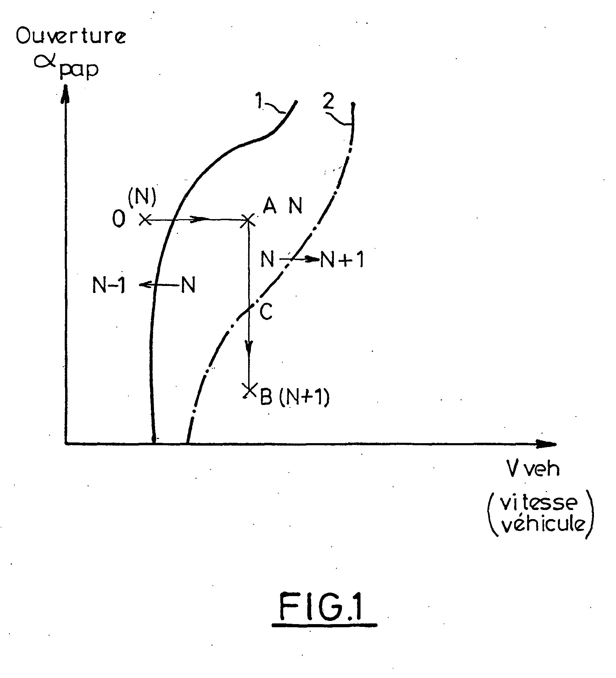

Un exemple de loi de changement de rapport couramment utilisée est proposé en figure 1, sur laquelle la courbe 1 représente la courbe de passage descendant (c'est à dire un passage du rapport N au rapport N-1, noté N/N-1), N étant le rapport courant de la transmission automatique. Ces lois de passage sont définies de telle sorte que les changements de rapport s'effectuent à des vitesses véhicules d'autant plus élevées que la charge moteur est élevée, dans la limite du régime moteur maximum autorisé (rupteur).

Par ailleurs, il est également constant que le passage N-1/N (c'est-à-dire en montant du rapport courant N-1 au rapport immédiatement supérieur N) se fait, pour une même charge moteur, à une vitesse sensiblement supérieure à celle à laquelle a lieu le passage inverse correspondant N/N-1, c'est-à-dire en rétrogradant. Cette disposition, que l'on peut assimiler à un effet d'hystérésis, a pour but d'éviter une tendance inacceptable au « pompage » entre les rapports N-1 et N, qui se manifesterait inévitablement si les passages en montant et en rétrogradant s'effectuaient dans les mêmes conditions de vitesse et de charge moteur.

Différents perfectionnements aux lois de passage des transmissions automatiques ont été proposés pour empêcher des changements de rapports intempestifs non souhaités par le conducteur, et adapter ces lois au style de conduite du conducteur, notamment dans la publication WO-A-9901685, divulguant les caractéristiques du préambule de la revendication 1.

Toutefois, en dépit de ces perfectionnements, les lois de passage peuvent imposer l'enchaînement de deux passages descendants sur un enfoncement de « pied à fond », dans les conditions suivantes.

Lorsque le point de fonctionnement dans le plan (Vitesse véhicule / Variable de charge du moteur) croise une première courbe de passage descendant, le véhicule perd légèrement de la vitesse pendant le passage, si bien que le point de fonctionnement de la transmission peut croiser la courbe de passage descendant suivante. Un second passage descendant, retarde alors sensiblement la reprise d'accélération attendue par le conducteur.

Il est également possible que la demande de passage descendant sur « pied à fond » soit suivie, au cours du changement de rapport d'une augmentation de la vitesse, entraînant l'annulation de la demande de passage descendant. Une telle « hésitation » de la transmission sur sa décision de changement de rapport est mal perçue car elle se traduit aussi par un défaut d'accélération » indésirable.

La présente invention vise à remédier aux défauts d'accélération constatés dans certaines situations, en dépit d'une demande de passage descendant par un « pied à fond » sur la pédale d'accélérateur.

bans ce but, elle propose de créer une information vitesse véhicule fictive représentant la vitesse véhicule au début du passage, et de prendre en compte cette valeur de « vitesse figée», pendant le déroulement de celui-ci à la place de la vitesse de déplacement réelle du véhicule.

Conformément à l'invention, la même valeur de vitesse peut être prise en compte jusqu'à la fin des passages descendants.

Lors des passages montants, cette valeur peut être prise en compte lorsqu'elle est supérieure à la vitesse réelle (Vᵥₑₕ).

L'invention prévoit donc un mode de gestion particulier de la valeur de vitesse de déplacement véhicule utilisée dans la décision du changement de rapport par les lois de passage, en vue d'éviter les défauts, ou « plats », d'accélération.

D'autres caractéristiques et avantages de l'invention apparaîtront clairement à la lecture de la description suivante d'un mode de réalisation particulier de celle-ci, en se reportant aux dessins annexés sur lesquels.
- la figure 1 rappelle le principe connu des lois de passage de vitesses,
- la figure 2 traduit la stratégie de commande proposée par l'invention,
- et les figures 3 et 4 illustrent trois cas particuliers de passages descendants.

Sur la figure 1, relative à l'état de la technique connue, la courbe (1) est une courbe de passages descendants (N/N-1), et la courbe (2) est une courbe de passages montants (N/N+1). Ces courbes visent à effectuer les passages à des vitesses véhicule d'autant plus élevées que la charge du moteur est élevée, dans les limites du régime moteur maximum autorisé, appelé parfois « rupteur ». Par ailleurs, le décalage entre les deux courbes permet d'éviter les phénomènes dits de « pompage » évoqués plus haut.

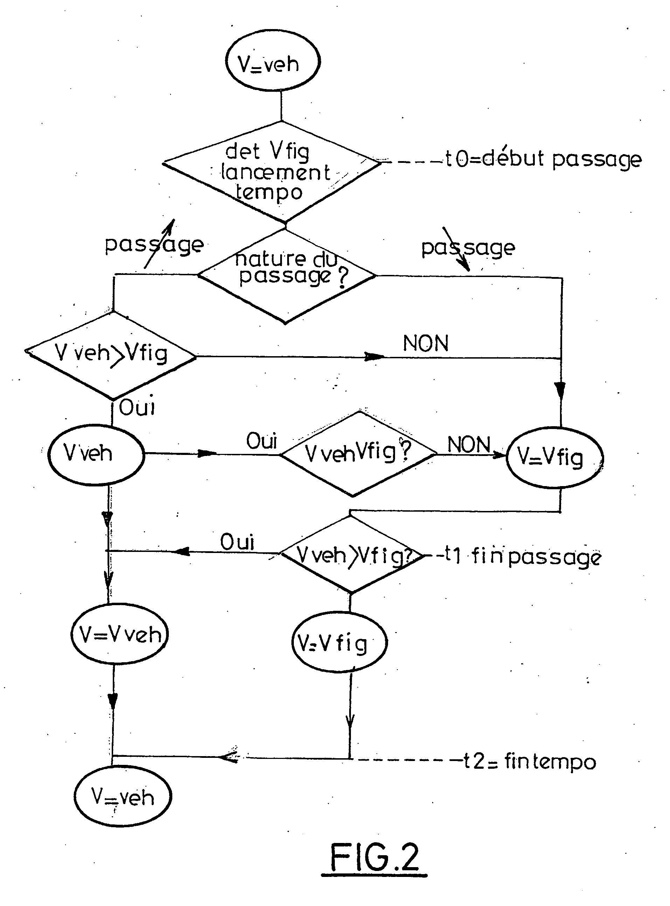

Le diagramme fonctionnel de la figure 2 indique que la vitesse prise en compte dans le calculateur de transmission pour déclencher les changements de rapport, est la vitesse réelle de déplacement du véhicule Vᵥₑₕ.

Conformément à l'invention, à l'instant tₒ de début de passage, la valeur instantanée de la vitesse de déplacement Vᵥₑₕ du véhicule est mémorisée, ou « figée ». Si le passage est un passage descendant, la « vitesse figée » est imposée dans le calculateur (V = V_{fig}) pour la gestion du passage pendant toute la durée de celui-ci, jusqu'à l'instant t₁, de fin du passage, tandis qu'une temporisation de durée supérieure à celle du passage est lancée jusqu'à t₂. A t₁, V_{fig} est comparée à la vitesse réelle du véhicule Vᵥₑₕ. Si à cet instant Vᵥₑₕ > V_{fig}, V_{fig} est abandonnée, et la vitesse prise en compte par le calculateur redevient la vitesse réelle du véhicule. Sinon V_{fig} est conservée jusqu'à t_{z}. où elle est abandonnée (V = Vᵥₑₕ).

bans le cas d'un passage montant, V_{fig} n'est imposée (V = V_{fig}) que si elle est supérieure à la vitesse réelle Vᵥₑₕ, et tant qu'elle le reste. Dans le cas contraire, si Vᵥₑₕ > V_{fig}, le calculateur ne prend pas en considération V_{fig} (V = Vᵥₑₕ). Enfin, si la vitesse figée repasse en dessous de la vitesse réelle en cours de passage montant, elle est abandonnée.

Cette stratégie permet en particulier d'empêcher l'enchaînement d'un second passage descendant à la suite d'un premier provoqué par un « pied à fond ». En effet, comme indiqué plus haut, en l'absence de disposition particulière, la diminution de la vitesse du véhicule en cours du passage descendant peut faire croiser au point de fonctionnement de la transmission deux courbes successives de passages descendants, et freiner le véhicule, alors que le conducteur souhaite bénéficier d'une accélération.

Conformément à l'invention, le fait que la vitesse soit « figée » jusqu'à ce qu'elle redevienne supérieure à sa valeur initiale d'avant le changement de rapport, dans les limites d'une temporisation (jusqu'à t₂) permet d'empêcher l'enchaînement d'un second passage descendant lors d'un « pied à fond ». Cette mesure est mise en évidence sur le schéma montrant qu'entre t₁ et t₂, si Vᵥₑₕ > V_{fig}, V = V_{veh,} le calculateur reprenant immédiatement la valeur courante Vᵥₑₕ; alors que si Vᵥₑₕ < V_{fig}, V = V_{fig} jusqu'à t₂.

L'invention permet également de gérer certaines hésitations du calculateur sur une décision de passage descendant. En effet, il peut arriver pour diverses raisons, que la vitesse du véhicule augmente légèrement après le déclenchement d'un passage descendant. Dans une telle situation, le fait de « figer » dans le calculateur la valeur de vitesse prise en compte, pendant tout le passage peut ainsi éviter certains cas d'annulation de passage descendant en cours.

Conformément à l'invention, la temporisation dépend de la valeur de la charge moteur. Plus précisément, elle doit être nulle en situation« pied levé », car il est admis que dans ce cas, le conducteur souhaite que la vitesse diminue. Dans cet objectif, V_{fig} est abandonné lorsque la pédale d'accélérateur est relâchée.

bans le cas des passages montants, l'invention prévoit de « figer » la vitesse lorsque celle-ci diminue mais pas lorsqu'elle augmente (même pendant le changement de rapport contrairement aux passages rétro) toujours dans la limite d'une temporisation. Toutefois, en passage montant, la temporisation peut être relancée si un nouveau changement de rapport est demandé alors que la vitesse prise en compte est « figée ». Enfin, comme pour les passages descendants, Vᵥₑₕ est restaurée dans le calculateur, dès qu'un levé de pied est détecté, car cela signifie que le conducteur désire que la vitesse diminue.

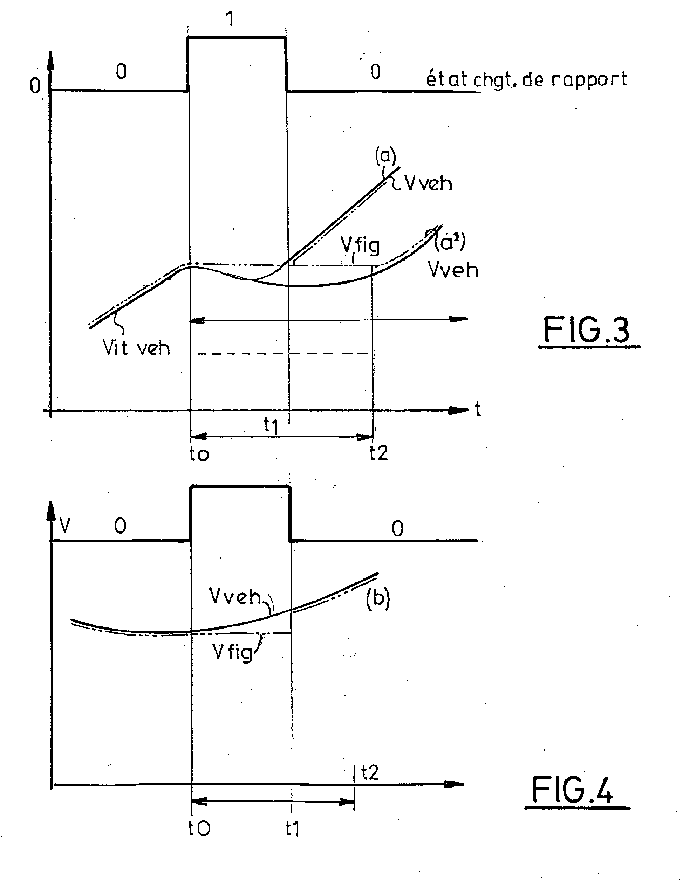

A titre d'exemple, la figure 3 illustre l'application de l'invention à deux cas de passages descendants avec perte de vitesse temporaire (courbes a et a'). Dans le premier cas (courbe a), (où le conducteur demande une forte accélération lors du passage), la vitesse du véhicule à t₁ est déjà redevenue supérieure à la vitesse à tₒ, si bien que dès t₁, le calculateur prend à nouveau en considération Vᵥₑₕ. Dans le second cas (courbe a'), où Vᵥₑₕ < V_{fig} à t₂, il faut attendre cet instant pour que le calculateur abandonne V_{fig}. Enfin, la figure 4 (courbe b) illustre un passage descendant sans perte de vitesse.

## Revendications

1. Procédé de contrôle des changements de rapport d'une transmission automatique ou automatisée respectant des lois de passage établies en fonction de la vitesse de déplacement du véhicule et de la charge du moteur, **caractérisé en ce que** la valeur de la vitesse (V_{fig}) au début du changement de rapport est prise en compte pendant le déroulement de celui-ci à la place de la vitesse de déplacement réelle (Vᵥₑₕ) du véhicule.

2. Procédé de contrôle selon la revendication 1, **caractérisé en ce que** la valeur de vitesse (V_{fig}) est prise en compte jusqu'à la fin des passages descendants.

3. Procédé de contrôle selon la revendication 1 ou 2, **caractérisé en ce que** la valeur de vitesse (V_{fig}) est prise en compte dans les passages montants lorsqu'elle supérieure à la vitesse réelle (Vᵥₑₕ).

4. Procédé de contrôle selon la revendication 2, **caractérisé en ce que** la valeur de vitesse (V_{fig}) est conservée dans la limite d'une temporisation.

5. Procédé de contrôle selon la revendication 4, **caractérisé en ce que** le temporisation est déclenchée au début du passage.

6. Procédé de contrôle selon la revendication 2, 4 ou 5, **caractérisé en ce qu'**après la fin d'un passage descendant, la valeur de vitesse (Vᵥₑₕ) est conservée dans la limite de la temporisation si elle est supérieure à la vitesse réelle (Vᵥₑₕ).

7. Procédé de contrôle selon l'une des revendications précédentes, **caractérisé en ce que** la valeur (V_{fig}) est adoptée en cours de passage montant lorsque la vitesse réelle (Vᵥₑₕ) devient inférieure à celle-ci.

8. Procédé de contrôle selon l'une des revendications précédentes, **caractérisé en ce que** la valeur (V_{fig}) peut être abandonnée en cours de passage montant si la vitesse réelle (Vᵥₑₕ) devient supérieure à celle-ci.

9. Procédé de contrôle selon l'une des revendications précédentes, **caractérisé en ce que** la valeur (V_{fig}) est abandonné lorsque la pédale d'accélérateur est relâchée.

10. Calculateur de transmission **caractérisé en ce qu'**il contrôle les changements de rapport conformément à l'une des revendications précédentes.

11. Transmission automatique ou automatisée à changements de rapports étagés, **caractérisée en ce qu'**elle comporte un calculateur conforme à la revendication 10.

12. Véhicule automobile, **caractérisé en ce qu'**il comporte une transmission conforme à la revendication 11.

## Claims

1. Method for controlling changes of ratio of an automatic or automated transmission that observes transition laws established according to the speed of movement of the vehicle and the engine load, **characterized in that** the value of the speed (V_{fig}) at the start of the ratio change is taken into account while the latter is proceeding instead of the actual speed of movement (Vᵥₑₕ) of the vehicle.

2. Control method according to Claim 1, **characterized in that** the speed value (V_{fig}) is taken into account until the end of the downward transitions.

3. Control method according to Claim 1 or 2, **characterized in that** the speed value (V_{fig}) is taken into account in the upward transitions when it is greater than the actual speed (Vᵥₑₕ).

4. Control method according to Claim 2, **characterized in that** the speed value (V_{fig}) is retained within the limit of a timer.

5. Control method according to Claim 4, **characterized in that** the timer is triggered at the start of the transition.

6. Control method according to Claim 2, 4 or 5, **characterized in that**, after the end of a downward transition, the speed value is retained within the limit of the timer if its greater than the actual speed (Vᵥₑₕ) .

7. Control method according to one of the preceding claims, **characterized in that** the value (V_{fig}) is adopted during an upward transition when the actual speed (Vᵥₑₕ) becomes less than the latter.

8. Control method according to one of the preceding claims, **characterized in that** the value (V_{fig}) can be abandoned during an upward transition if the actual speed (Vᵥₑₕ) becomes greater than the latter.

9. Control method according to one of the preceding claims, **characterized in that** the value (V_{fig}) is abandoned when the accelerator pedal is released.

10. Transmission computer, **characterized in that** it controls the ratio changes in accordance with one of the preceding claims.

11. Automatic or automated transmission with staged ratio changes, **characterized in that** it includes a computer in accordance with Claim 10.

12. Motor vehicle, **characterized in that** it includes a transmission in accordance with Claim 11.

## Patentansprüche

1. Verfahren zur Steuerung der Schaltvorgänge eines Automatikgetriebes oder automatisierten Getriebes, das Schaltgesetze beachtet, die abhängig von der Fahrgeschwindigkeit des Fahrzeugs und der Motorlast erstellt werden, **dadurch gekennzeichnet, dass** der Wert der Geschwindigkeit (V_{fig}) zu Beginn des Schaltvorgangs während dessen Ablauf anstelle der realen Fahrgeschwindigkeit (Vᵥₑₕ) des Fahrzeugs berücksichtigt wird.

2. Steuerverfahren nach Anspruch 1, **dadurch gekennzeichnet, dass** der Geschwindigkeitswert (V_{fig}) bis zum Ende der Zurückschaltvorgänge berücksichtigt wird.

3. Steuerverfahren nach Anspruch 1 oder 2, **dadurch gekennzeichnet, dass** der Geschwindigkeitswert (V_{fig}) bei den Hochschaltvorgängen berücksichtigt wird, wenn er über der realen Geschwindigkeit (Vᵥₑₕ) liegt.

4. Steuerverfahren nach Anspruch 2, **dadurch gekennzeichnet, dass** der Geschwindigkeitswert (V_{fig}) in den Grenzen einer Verzögerung beibehalten wird.

5. Steuerverfahren nach Anspruch 4, **dadurch gekennzeichnet, dass** die Verzögerung zu Beginn des Schaltvorgangs ausgelöst wird.

6. Steuerverfahren nach Anspruch 2, 4 oder 5, **dadurch gekennzeichnet, dass** nach dem Ende eines Zurückschaltvorgangs der Geschwindigkeitswert (Vᵥₑₕ) in den Grenzen der Verzögerung gehalten wird, wenn er höher als die reale Geschwindigkeit (Vᵥₑₕ) ist.

7. Steuerverfahren nach einem der vorhergehenden Ansprüche, **dadurch gekennzeichnet, dass** der Wert (V_{fig}) während eines Hochschaltvorgangs übernommen wird, wenn die reale Geschwindigkeit (Vᵥₑₕ) unter diesen Wert fällt.

8. Steuerverfahren nach einem der vorhergehenden Ansprüche, **dadurch gekennzeichnet, dass** der Wert (V_{fig}) während eines Hochschaltvorgangs fallengelassen werden kann, wenn die reale Geschwindigkeit (Vᵥₑₕ) höher als dieser wird.

9. Steuerverfahren nach einem der vorhergehenden Ansprüche, **dadurch gekennzeichnet, dass** der Wert (V_{fig}) fallengelassen wird, wenn das Gaspedal losgelassen wird.

10. Getrieberechner, **dadurch gekennzeichnet, dass** er die Schaltvorgänge gemäß einem der vorhergehenden Ansprüche steuert.

11. Automatikgetriebe oder automatisiertes Getriebe mit Stufenschaltung, **dadurch gekennzeichnet, dass** es einen Rechner nach Anspruch 10 aufweist.

12. Kraftfahrzeug, **dadurch gekennzeichnet, dass** es ein Getriebe nach Anspruch 11 aufweist.
